# EUROPEAN PATENT APPLICATION

(11) **EP 2 656 957 A2**
(43) Date of publication of application: **30.10.2013**
(21) Application number: 13164579.8
(22) Date of filing: 19.04.2013
(51) Int. Cl.: B23K 13/01

(54) **Methods and apparatuses for preheated interval welding**

(30) Priority: 23.04.2012 US 201213453104
(71) Applicant: General Electric Company, Schenectady, New York 12345 (US)
(72) Inventor: Woods, Steven Charles, Greenville, SC 29615 (US); Hunt Mark Lawrence, Greenville, SC 29615 (US)
(74) Representative: Cleary, Fidelma

(57) **Abstract**

Preheated interval welding methods for welding a weld material (120) to a substrate material (110) can include preheating the substrate material (110) to a preheat temperature less than a solidus temperature of the substrate material (110), melting the weld material (120) to produce molten weld material (121) at a melting distance away from the substrate material (110), and applying the molten weld material (121) in a plurality of intervals to the substrate material (110).

## Description

The subject matter disclosed herein relates to welding and, more particularly, repair welding for high temperature performance alloys.

Metal and alloy parts may experience various wear instances or patterns in material as a result of application fatigue such as cracking, wearing, abrasions, erosion or any other act that may cause the removal or wear of substrate material. To replace the loss in material and repair the part, various forms of welding can be used to bond new weld material to the original substrate material. Such welding can include heating the substrate material (i.e., the part being repaired), contacting the weld material to the substrate material, and then applying additional heat or energy to the weld material so that the weld material melts to become liquidus and can thereby bond with the substrate material. However, some materials, such as nickel based superalloys that can be used in high temperature applications such as in hot gas path components in gas turbines (e.g., buckets), can crack and/or be less susceptible to forming strong bonds with weld material if welded while at a non-elevated temperature, such as at room temperature, and/or using non-matching weld material.

Welds may therefore be performed by preheating substrate materials to an elevated temperature prior to welding. However, the constant additional heat or energy used during welding to actually melt the weld material can also radiate to the substrate material and cause an even further increase in the substrate material's temperature such as to a point above its solidus or liquidus. Such an increase may then result in slumping, melting or other changes to the microstructure that can reduce the substrate material's physical properties such as strength and/or toughness.

Accordingly, alternative welding methods and apparatuses would be desirable in the art.

In one aspect, the invention resides in a preheated interval welding method for welding a weld material to a substrate material. The preheated interval welding method includes preheating the substrate material to a preheat temperature less than a solidus temperature of the substrate material, melting the weld material to produce molten weld material at a melting distance away from the substrate material, and applying the molten weld material in a plurality of intervals to the substrate material.

In another aspect, the invention resides in a preheated interval welding method for welding a weld material to a substrate material. The preheated interval welding method includes disposing a welding apparatus adjacent a substrate material, preheating the substrate material to a preheat temperature less than its solidus temperature, and transitioning the welding apparatus element away from the substrate material and adjacent to the weld material. The method further includes melting the weld material to produce molten weld material and applying the molten weld material in a plurality of intervals to the substrate material.

In yet another aspect, the invention resides in a preheated interval welding system for preheating a substrate material and applying a weld material. The preheated interval welding system includes a preheating apparatus that preheats a repair surface of the substrate material to a preheat temperature and a welding apparatus that melts the weld material into molten weld material and applies the molten weld material to the repair surface in a plurality of intervals.

These and additional features provided by the embodiments discussed herein will be more fully understood in view of the following detailed description, in conjunction with the drawings.

The embodiments set forth in the drawings are illustrative and exemplary in nature and not intended to limit the inventions defined by the claims. The following detailed description of the illustrative embodiments can be understood when read in conjunction with the following drawings, where like structure is indicated with like reference numerals and in which:
FIG. 1 is an exemplary preheated interval welding method according to one or more embodiments shown or described herein;
FIG. 2 is a schematic illustration of a preheated interval welding system preheating a substrate according to one or more embodiments shown or described herein;
FIG. 3 is a schematic illustration of the preheated interval welding system of FIG. 2 melting a weld material according to one or more embodiments shown or described herein;
FIG. 4 is a schematic illustration of a preheated interval welding system comprising two welding apparatuses that is preheating a substrate according to one or more embodiments shown or described herein; and
FIG. 5 is a schematic illustration of the preheated interval welding system of FIG. 4 melting a weld material according to one or more embodiments shown or described herein.

Preheated interval welding methods disclosed herein generally comprise first preheating a substrate material to a preheat temperature approaching its solidus temperature. Weld material is then melted and applied to the substrate material in a plurality of intervals. The interval-regimented application of weld material to the preheated substrate material can allow for the reduction in temperature differential between the two materials while further controlling the amount of excess heat applied to the substrate material around the weld.

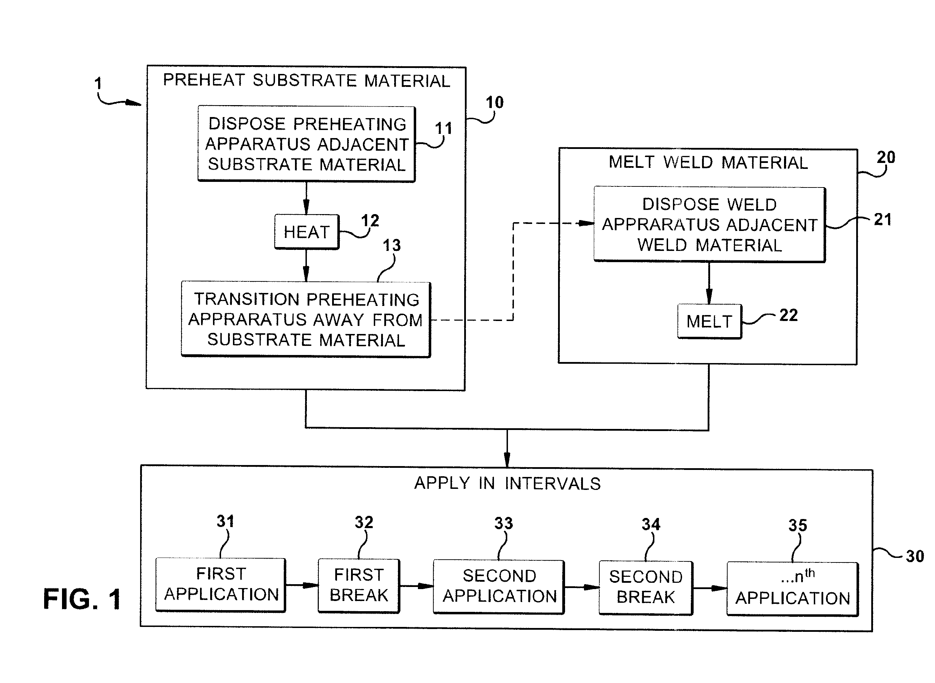

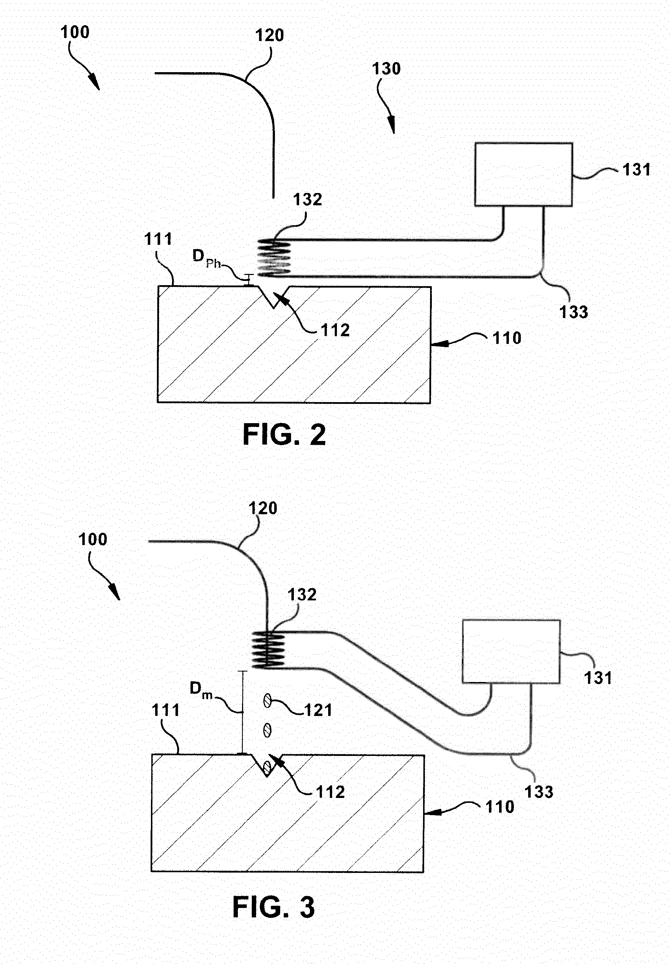

With reference to FIGS. 1-3, an exemplary preheated interval welding method 1 is illustrated that can be incorporated into various welding systems such as the exemplary preheated interval welding system 100 illustrated in FIGS. 2 and 3.

As illustrated in FIGS. 2 and 3, the exemplary preheated interval welding system 100 may generally comprise a substrate material 110 that is to have weld material 120 applied to it at one or more locations. The substrate material 110 can comprise any type of material that can have weld material 120 applied (i.e., contacted and subsequently bonded) to it at one or more locations. For example, the substrate material 110 may comprise any metal, alloy, or other material that is capable of bonding with a weld material 120 when the weld material 120 is in a liquidus state from an application of energy such as heat. In some exemplary embodiments, the substrate material 110 may comprise a nickel based superalloy such as those used gas turbines for hot gas path applications.

The substrate material 110 may comprise any dimensions and geometry that allow for a weld location to be preheated and then allow for the application of weld material 120. For example, in some embodiments, such as that illustrated in FIGS. 2 and 3, the substrate material 110 may comprise a relatively flat repair surface 111 with a void 112. The void 112 may be present from various application fatigue, such as cracking, wearing, abrasions, erosion or any other act that may cause the removal or wear of substrate material 110. In other embodiments, the substrate material 110 may comprise curves, corners, arms, joints or any other type of shape such as those that may be present in a bucket for a gas turbine.

The exemplary preheated interval welding system 100 further comprises a weld material 120 that is to be welded onto the substrate material 110. The weld material 120 can comprise any material that can be heated to a state above its liquidus temperature such that it melts and can be applied to the substrate material 110 in a plurality of intervals as will become appreciated herein. In some embodiments, the weld material 120 can comprise the same or similar material as the substrate material 110. Such embodiments may allow for less shrinkage, cracking or other performance defects by having the substrate material 110 and the weld material 120 possess the same or similar physical characteristics. Such an embodiment can provide a closer match of physical properties between the substrate material 110 and the weld material 120 to potentially allow for increased and more predictable performance.

Similar to the substrate material 110, the weld material 120 may comprise any dimensions and geometry that allow for the weld material 120 to be heated to a temperature greater than its liquidus temperature such that molten weld material 121 can be applied in a plurality of intervals to the substrate material 110. For example, in some embodiments, such as that illustrated in FIGS. 1 and 2, the weld material 120 may comprise a long wire that can be unspooled and fed to a location that is proximate the substrate material 110. In other embodiments, the weld material 120 may comprise other configurations such as pellets, rods, blocks, ingots or any other size and/or shape.

Still referring to FIGS. 2 and 3, the exemplary preheated interval welding system 100 additionally comprises a welding apparatus 130. The welding apparatus 130 can comprise any apparatus that can apply enough energy (e.g., heat) to a weld material 120 to heat the weld material 120 above its liquidus temperature so that it can be welded to the substrate material 110. For example, in some embodiments, such as that illustrated in FIGS. 2 and 3, the welding apparatus 130 can comprise an induction welding apparatus comprising a power supply 131 connected to an induction coil 132 via an electrical connection 133. In such embodiments, the power supply 131 can provide an electric current to the induction coil 132 through the electrical connection 133. When the electric current is provided to the induction coil 132, the induction coil 132 produces an electromagnetic field to heat the neighboring work piece through resistive heating from the electromagnetic induction. It should be appreciated that while the welding apparatus 130 is exemplarily illustrated as an induction welding apparatus, the welding apparatus 130 may alternatively comprise any other type of welding apparatus 130 such as, for example, an arc welding apparatus (e.g., TIG welding), gas welding apparatus (e.g., oxyacetylene welding), energy beam welding apparatus (e.g., laser beam welding) and/or any other alternative welding apparatus capable of heating the weld material 120 above its liquidus temperature.

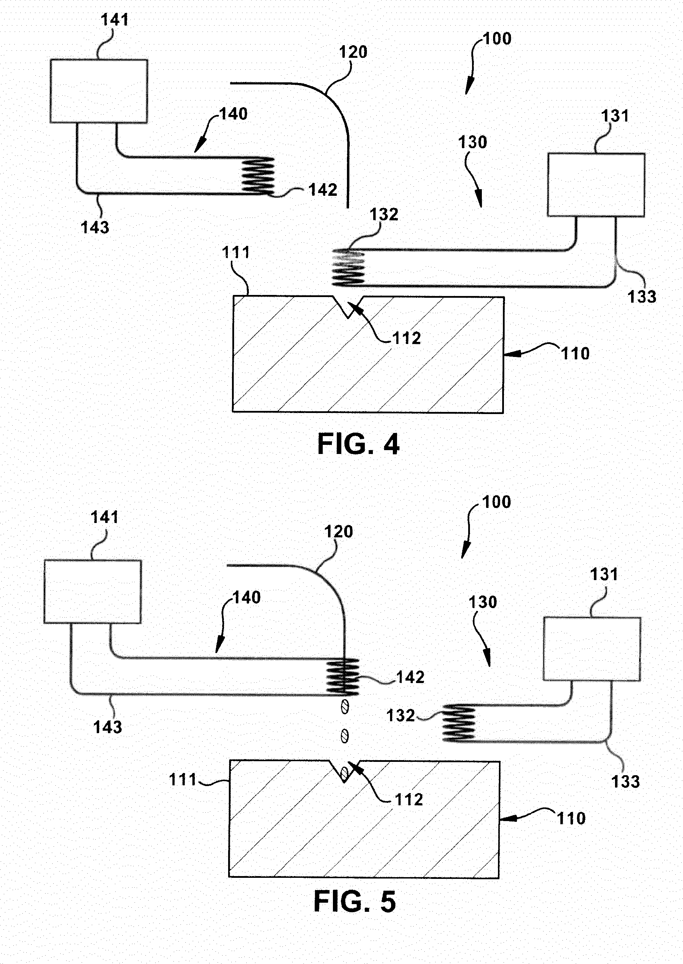

In some embodiments, such as that illustrated in FIGS. 2 and 3, the exemplary preheated interval welding system 100 may use the same welding apparatus 130 to both melt the weld material 120 and preheat the substrate material 110 as will become appreciated herein. However, in alternative or additional embodiments, such as that illustrated in FIGS. 4 and 5, the exemplary preheated interval welding system 100 may further comprise a separate preheating apparatus 140 that is used to preheat the substrate material 110. The preheating apparatus 140 can comprise any apparatus operable to preheat an area of the substrate material 110 (such as a void 112) that will have molten weld material 121 applied to it. For example, in some embodiments, such as that illustrated in FIGS 4 and 5, the preheating apparatus 140 may similarly comprise an induction welding apparatus comprising a power supply 141 connected to an induction coil 142 via an electrical connection 143. In such an embodiment, the induction coil 142 can be placed adjacent the repair surface 111 when the preheating apparatus 140 is preheating the substrate material 110 and transitioned away from the repair surface 111 when not preheating the substrate material 110 as will become appreciated herein. In some embodiments, the preheating apparatus 140 may comprise alternative and/or additional apparatuses to preheat the substrate material 110 including, for example, ovens, torches, lasers, other weld devices, or any other apparatus suitable to preheat an area of the substrate material 110.

Referring now to FIGS. 1-3, the preheated interval welding method 1 can be incorporated into various preheated interval welding systems 100 such as those discussed above. The preheated interval welding method 1 generally first comprises preheating the substrate material 110 in step 10 and melting the weld material 120 in step 20.

Preheating the substrate material 110 in step 10 comprises heating the area of the substrate material 110 where the weld material 120 is to be added (e.g., a void 112 in the repair surface 111 of the substrate material 110) to a preheat temperature. The preheat temperature can comprise any temperature above room temperature such as a temperature that approaches the solidus temperature of the substrate material 110.

The substrate material 110 can be preheated using any available preheating apparatus 140 that is capable of heating an area of the substrate material 110 to the preheat temperature. As discussed above, in some embodiments (e.g., the embodiment illustrated in FIGS. 2 and 3), the welding apparatus 130 that is to be utilized to melt the weld material 120 in step 20 may also be utilized to preheat the substrate material 110 in step 10 (i.e., the welding apparatus 130 comprises the preheating apparatus 140. For example, as illustrated in the preheated interval welding method 1 shown in FIG. 1, and with reference to the preheated interval welding system 100 illustrated in FIGS. 2 and 3, preheating the substrate material 110 in step 10 may comprise first disposing the welding apparatus 130 adjacent the substrate material 110 in step 11. Disposing the welding apparatus 130 adjacent to the substrate material 110 in step 11 can comprise disposing the heating portion of the welding apparatus 130 (for example the induction coil 132 for an induction welding apparatus as illustrated in FIGS. 2 and 3) in close enough proximity to the to-be welded area of the substrate material 110 to allow for its heating. In particular, where the substrate material 110 comprises a void 112 in the repair surface 111 as illustrated, then the induction coil 132 or other analogous part of the welding apparatus 130 can be placed proximate the void 112.

Heat/energy may then be applied in step 12 to the substrate material 110. For example, where the welding apparatus 130 comprises an induction welding apparatus, the electrical current from the power supply 131 can be initiated such that the electromagnetic field from the induction coil 132 creates resistive heating from the electromagnetic induction. The power supply 131 can be monitored and adjusted to heat the substrate material 110 to the preheat temperature such as one that approaches but does not exceed the substrate material's 110 solidus temperature.

In some embodiments, the temperature of the substrate material 110 may be monitored via one or more temperature sensors such as thermocouples, pyrometers thermometers and/or any other appropriate device. Feedback from the one or more temperature sensors can be utilized to control the amount of heat and/or energy applied to the substrate material 110 such that its elevated preheat temperature is controlled. For example, such feedback can be utilized to control the amount of power to the welding apparatus 130 (or other preheating apparatus 140), the distance between the substrate material 110 and the welding apparatus 130, or any other variable that may affect the temperature of the substrate material 110.

Preheating the substrate material 110 in step 10 may optionally further comprise transitioning the preheating apparatus 140 away from the substrate material 110 in step 13 to stop or limit the amount of heat applied to the substrate material 110. For example, where the preheating apparatus 140 would obstruct the application of the weld material 120, and/or where the continuous presence of the preheating apparatus 140 would cause a continuous rise in temperature of the substrate material 110, then the preheating apparatus 140 may be transitioned away from the substrate material 110 to better allow for the subsequent application of molten weld material 121 and/or limit the amount of preheating of the substrate material 110. Alternatively, where the physical presence of the preheating apparatus 140 does not interfere with the subsequent application of molten weld material 121 and the preheat temperature can still be controlled with its continuous presence, the preheating apparatus 140 may optionally remain adjacent the substrate material 110 throughout welding to maintain the substrate material 110 at or around the preheat temperature.

Referring to FIGS. 1-5, the preheated interval welding method 1 further comprises melting the weld material 120 in step 20 to produce molten weld material 121. Specifically, melting the weld material 120 in step 20 can comprise disposing the weld apparatus 130 adjacent the weld material 120 in step 21 and heating the weld material 120 to a temperature above its liquidus temperature in step 22. In embodiments where the welding apparatus 130 comprises the preheating apparatus 140 (such as when the same welding apparatus 130 is used to both preheat the substrate material 110 in step 10 and melt the weld material 120 in step 20 as illustrated in FIGS. 2 and 3), then transitioning the preheating apparatus 140 away from the substrate material 110 in step 13 may correspond with disposing the weld apparatus 130 adjacent the weld material 120 as indicated by the dashed line connecting step 13 and step 21 in FIG. 1. For example, transitioning the preheating apparatus 140 away from the substrate material 110 in step 13 can be simultaneous with disposing the weld apparatus 130 adjacent the weld material 120 in step 21. Such an embodiment may reduce the amount of time between preheating the substrate material 110 in step 10 and melting the weld material 120 in step 20 to limit the amount of temperature drop in the preheated substrate material 110 before the molten weld material 121 is applied.

Melting the weld material 120 in step 20 may be accomplished utilizing a variety of welding apparatuses 130 as discussed above by applying heat and/or energy to the weld material 120 in step 22 to produce molten weld material 121. For example, as illustrated in FIGS. 2 and 3, the welding apparatus 130 can comprise an induction welding apparatus such that the weld material 120 can be heated to a temperature above its liquidus temperature via the induction coil 132. However, as also discussed above, various other welding apparatuses 130 may alternatively be utilized to melt the weld material 120 in step 20 such as arc welding apparatuses (e.g., TIG welding), gas welding apparatuses (e.g., oxyacetylene welding), energy beam welding apparatuses (e.g., laser beam welding) and/or any other alternative welding apparatuses capable of heating the weld material 120 above its liquidus temperature.

Furthermore, melting the weld material 120 in step 20 may be performed in any type of environment. For example, in some embodiments, the melting of the weld material 120 in step 20 may occur in an inert atmosphere. In some embodiments, the melting of the weld material 120 in step 20 may occur in a low pressure environment. In some embodiments, the melting of the weld material 120 in step 20 may occur in any other type of environment that allows for the melting of the weld material 120 to produce molten weld material 121 for the subsequent application to the substrate material 110 in a plurality of intervals.

In some embodiments, such as where the preheating apparatus 140 and the welding apparatus 130 comprise the same apparatus (e.g., as illustrated in FIGS. 2 and 3), the melting of the weld material 120 in step 20 may occur at a melting distance Dₘ. In some embodiments, the melting distance Dₘ from the substrate material 110 is great enough such that the welding apparatus 130 used to melt the weld material 120 maintains the substrate material 110 below its solidus temperature. In some embodiments, the melting distance Dₘ from the substrate material 110 is greater than a preheating distance Dₚₕ that separated the substrate material 110 from the welding apparatus 130 (or preheating apparatus 140) when preheating the substrate material 110 in step 10. By increasing the distance (i.e., having a melting distance Dₘ greater than the preheating distance Dₚₕ) the amount of heat and/or energy applied to the substrate material 110 can be limited such that the temperature of the substrate material 110 does not excessively rise, such as over its solidus temperature.

Still referring to FIGS. 1-3, the preheated interval welding method 1 further comprises applying the molten weld material 121 in a plurality of intervals to the substrate material 110 in step 30. Applying the molten weld material 121 in a plurality of intervals comprises alternating the application of molten weld material 121 and breaks in time. For example, as illustrated in FIG. 1, applying the molten weld material 121 in a plurality of intervals in step 30 can comprise a first application of molten weld material 121 in step 31 (e.g., dropping a first drop of molten weld material 121) followed by a first break in step 32 where no molten weld material 121 is applied. A second application of molten weld material 121 can then occur in step 33 (e.g., dropping a second drop of molten weld material 121) followed by a second break in step 34 where no molten weld material 121 is applied. This alternating pattern may continue through the n^{th} application of molten weld material 121 as illustrated in step 35 (e.g., dropping the n^{th} drop of molten weld material 121) wherein each application of molten weld material 121 (e.g., steps 31, 33 and 35) is separated by a break (e.g., steps 32 and 34) when no molten weld material 121 is applied.

In some embodiments, each application of molten weld material 121 (e.g., steps 31, 33 and 35) may comprise substantially similar amounts of molten weld material 121 such that each application adds a more predictable amount of molten weld material 121 to the substrate material 110. Additionally, where melting the weld material 120 in step 20 occurs in a specific environment (e.g., low pressure, in the presence of inert gasses, etc.), the application of molten weld material 121 in a plurality of intervals to the substrate material 110 in step 30 may similarly occur in the same or substantially similar environment.

It should now be appreciated that by preheating the substrate material 110 to a preheat temperature approaching its liquidus temperature, the substrate material 110 can provide for an eventual metallurgical bond with the weld material 120 with more similar microstructural and physical properties, particularly when the weld material 120 matches the substrate material 110. Moreover, the preheated substrate material 110 can also be preheated to a temperature approaching its solidus temperature such that when the molten weld material 121 is applied to the substrate material 110 (e.g., when a drop of the molten weld material 121 touches the substrate material 110), a small layer of the substrate material 110 may briefly rise to or above its solidus temperature where it is contact with the molten weld material 121. Such an application may both provide a strong bond between the substrate material 110 and the weld material 120 while also reducing the heat affected zone ("HAZ") by limiting the amount of heat/energy applied to the substrate material 110.

The terms "a" and "an" herein do not denote a limitation of quantity, but rather denote the presence of at least one of the referenced item. The modifier "about" used in connection with a quantity is inclusive of the stated value and has the meaning dictated by the context, (e.g., includes the degree of error associated with measurement of the particular quantity). The suffix "(s)" as used herein is intended to include both the singular and the plural of the term that it modifies, thereby including one or more of that term (e.g., the metal(s) includes one or more metals).

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A preheated interval welding method (1) for welding a weld material (120) to a substrate material (110), the preheated interval welding method (1) comprising:
preheating (10) the substrate material (110) to a preheat temperature less than a solidus temperature of the substrate material (110);
melting (20) the weld material (120) to produce molten weld material (121) at a melting distance away from the substrate material (110); and
applying (30) the molten weld material (121) in a plurality of intervals to the substrate material (110).

2. The preheated interval welding method of claim 1, wherein the melting distance is great enough such that a welding apparatus (130) used to melt the weld material (120) maintains the substrate material (110) below its solidus temperature.

3. The preheated interval welding method of claim 1 or 2, wherein applying (30) the molten weld (121) material in a plurality of intervals to the substrate material (110) causes a portion of the substrate material (110) to temporarily rise above its solidus temperature.

4. The preheated interval welding method of any of claims 1 to 3, wherein applying (30) the weld material (120) comprises disposing liquid droplets of the molten weld material (121) onto the substrate material (110).

5. The preheated interval welding method of any of claims 1 to 4, wherein preheating (10) the substrate material (110) and melting (20) the weld material (120) are performed using a single welding apparatus (130).

6. The preheated interval welding method of claim 5, wherein the single welding apparatus (130) comprises an induction welding apparatus.

7. The preheated interval welding method of any preceding claim, wherein preheating (10) the substrate material (110) comprises heating using an oven.

8. The preheated interval welding method of any preceding claim, wherein the substrate material (110) comprises a nickel based superalloy.

9. The preheated interval welding method of any preceding claim further comprising:
disposing (11) a welding apparatus (130) adjacent a substrate material (110);
and
transitioning (13) the welding apparatus (130) away from the substrate material (110) and adjacent to the weld material (120);

10. The preheated interval welding method of any preceding claim, wherein the preheat temperature of the substrate material (110) is monitored by one or more temperature sensors.

11. The preheated interval welding method of claim 10, wherein the one or more temperature sensors comprises at least a pyrometer.

12. A preheated interval welding system (100) for preheating a substrate material (110) and applying a weld material (120), the preheated interval welding system (100) comprising:
a preheating apparatus that preheats a repair surface (111) of the substrate material (110) to a preheat temperature; and
a welding apparatus that melts the weld material (120) into molten weld material (121) and applies the molten weld material (121) to the repair surface (111) in a plurality of intervals.

13. The preheated interval welding system of claim 12, wherein the welding apparatus comprises the preheating apparatus.

14. The preheated interval welding system of claim 12 or 13, wherein the welding apparatus is at a preheating distance from the substrate material (110) when preheating the substrate material (110) and is at a melting distance from the substrate material (110) that is greater than the preheating distance when melting the weld material (120).

15. The preheated interval welding system of any of claims 12 to 14, wherein the preheating apparatus preheats the substrate material (110) to the preheat temperature based on feedback from one or more temperature sensors.
